# EUROPÄISCHE PATENTSCHRIFT

(11) **EP 0 398 141 B1**
(45) Veröffentlichungstag und Bekanntmachung des Hinweises auf die Patenterteilung: **16.02.1994**
(21) Anmeldenummer: 90108713.0
(22) Anmeldetag: 09.05.1990
(51) Int. Cl.: B01D 53/34

(54) **Verfahren zur rückstandsfreien Verdampfung von Ammoniakwasser mit anschliessender Beladung eines Trägerluftstroms**
Process for vaporisation without residues of ammonia water with following dotation of an air stream
Procédé de vaporisation sans résidues d'eau ammoniacale suivit d'une dotation par un courrant d'air

(30) Priorität: 13.05.1989 DE 3915731
(43) Veröffentlichungstag der Anmeldung: 22.11.1990
(73) Patentinhaber: Uhde GmbH, 44141 Dortmund (DE)
(72) Erfinder: Haacker, Ingo, Dipl.-Ing., D-4750 Unna (DE); Krux, Peter, Dipl.-Ing., D-4600 Dortmund 41 (DE)

(56) Entgegenhaltungen:
- EP-A- 0 278 241
- DE-A- 3 515 843
- DE-U- 8 612 710
- US-A- 3 852 409

## Beschreibung

Die Erfindung betrifft ein Verfahren zur rückstandsfreien Verdampfung von Ammoniakwasser mit anschließender Beladung eines heißen Trägerluftstroms.

Rauchgase aus der Verfeuerung von fossilen Brennstoffen enthalten Stickoxide. Zur Minderung des Stickoxidgehaltes werden die Rauchgase durch einen mit Katalysator gefüllten Reaktionsraum geleitet. Am Katalysator werden die Stickoxide NOₓmittels zugeführtem Ammoniak NH₃ bei Temperaturen zwischen 150 °c und 550 °C zu molekularem Stickstoff und Wasser reduziert.

Die zu behandelnden Rauchgase enthalten ca. 800 mg Stickoxide NOₓ je 1 m³ Rauchgas. Um 80 % der Stickoxide zu reduzieren, werden ca. 650 mg je 1 m³ Rauchgas dem Rauchgas zugemischt. Die zu mischenden Massenströme besitzen ein gegenseitiges Massenverhältnis in der Größenordnung von 1 : 2000 (1 = NH₃, 2000 = Rauchgas).

Diese Mischaufgabe wird in bekannter Weise wie folgt gelöst: Das reine Ammoniak NH₃ wird in einen heißen Trägerluftstrom eingespritzt und durch direkten Wärmeaustausch mit der heißen Trägerluft verdampft. Das dabei entstehende Luft-/Ammoniakdampf-Gemisch enthält ca. 5 Vol.-% Ammoniak und etwa 95 Vol.-% Luft.

Dieses Luft-/Ammoniakdampf-Gemisch wird dem Rauchgasstrom vor Eintritt in den Reaktionsraum über Verteilerdüsen beigemischt. Durch eine gleichmäßige Anordnung der Verteilerdüsen im Rauchgaskanalquerschnitt wird eine gleichförmige Verteilung des Ammoniaks über den Rauchgaskanalquerschnitt sichergestellt. Infolge der vorangegangenen Trägerluftzumischung wird dem Rauchgas ein Teil beladener Trägerluft je 100 Teile Rauchgas auf das Volumen bezogen zugemischt. Das verbesserte Mischungsverhältnis begünstigt die gleichförmige Verteilung des Ammoniaks im Rauchgasstrom.

Die Rauchgastemperatur wird durch die Eindüsung des relativ kälteren Ammoniak-/Luft-Gemisches nur unwesentlich herabgesetzt wegen des Massenverhältnisses der beteiligten Stoffströme.

Die Trägerluft wird üblicherweise durch indirekten Wäurmeaustausch mit kondensierendem Niederdruckdampf erhitzt. Die Temperatur des Niederdruckdampfes beträgt mindestens 160 °C. Das in diesem bekannten Verfahren verwendete reine Ammoniak wird in flüssiger Form angeliefert und flüssig am Verbrauchsort bevorratet. Es ist nicht auszuschließen, daß beim Umgang mit flüssigem, reinem Ammoniak Störfälle eintreten. Dabei können größere Mengen flüssigen Ammoniaks in die Umgebung freigesetzt werden. Das dann verdunstende Ammoniak würde inder Nachbarschaft des Verbrauchsortes gesundheitsgefährdend auf menschliches, tierisches und pflanzliches Leben einwirken.

Um dieses Risiko-Potential herabzusetzen, ist es bekannt, die Ammoniak-Konzentration der zu handhabenden Flüssigkeit zu vermindern. Dazu wird eine Mischung von Wasser mit Ammoniak - sogenanntes Ammoniakwasser - eingesetzt. Das Ammoniakwasser enthält nur etwa 25 - 30 Gew. % Ammoniak.

Wird nun Ammoniakwasser anstelle von reinem Ammoniak zugeführt, so muß neben dem Ammoniak das mit ihm in Mischung vorliegende Wasser ebenfalls in Dampf überführt werden.

Im Ammoniakwasser können Feststoffe gelöst sein. Bei der vollständigen Verdampfung von Ammoniakwasser fallen die gelösten Feststoffe als fester Rückstand an. Die Aufgabe der Erfindung besteht nun darin, einen aus dem Verfahren auszuschleusenden Rückstandsstrom zu vermeiden.

Eine weitere Aufgabe besteht darin, die Energieversorgung des erfindungsgemäßen Verfahrens so zu gestalten, daß die gleiche Energieart eingesetzt werden kann, wie bei dem bekannten, mit reinem Ammoniak arbeitenden Verfahren.

Die vorliegende Erfindung löst diese Aufgabe durch ein Verfahren zum rückstandsfreien Verdampfen eines Ammoniakwasser-Massestroms, wobei ein Trägerluftstrom auf eine Temperatur erhitzt wird, die mindestens oberhalb der Taupunkttemperatur des Ammoniakwasser-/Luftgemisches liegt, der Ammoniakwasser-Massestrom teilweise verdampft wird, der gebildete Dampf in einem heißen Trägerluftstrom verwirbelt wird und die verbleibende Flüssigkeit mit einem Treibmittel in dem Trägerluftstrom verteilt wird und der hieße Trägerluftstrom zuerst mit der Flüssigkeit nebst Treibmittel beladen wird und der Dampf in dem derart beladenen Trägerluftstrom verwirbelt wird.

Bei der teilweisen Verdampfung des Ammoniakwasser-Massestroms entsteht die verbleibende Flüssigkeit. Die verbleibende Flüssigkeit enthält nicht verdampfbare Stoffe, welche bei vollständiger Verdampfung des Ammoniakwassers Rückstände bilden würden. Der heiße Trägerluftstrom wird zuerst mit der verbliebenen Flüssigkeit nebst Treibmittel beladen. Das Treibmittel verteilt die Flüssigkeit im Trägerluftstrom. In dem derart beladenen Trägerluftstrom wird anschließend der Dampf verwirbelt.

Im erfindungsgemäßen Verfahren wird für das teilweise Verdampfen des Ammoniakwasser-Massestroms, für die Erhitzung des Trägerluftstroms und als Treibmittel vorzugsweise Wasserdampf verwendet.

Im erfindungsgemäßen Verfahren wird der Wasserdampf in Form von Niederdruckdampf bevorzugt eingesetzt.

Der Niederdruckdampf wird mit einer Temperatur von mindestens 160 °C eingesetzt.

Die Trägerluft wird im erfindungsgemäßen Verfahren auf eine Temperatur erhitzt, die stets oberhalb der Taupunkt-Temperatur des Ammoniak-Luft/-Gemisches liegt.

Die vorliegende Erfindung hat den Vorteil, daß die nicht verdampfbaren Stoffe - die bekanntlich zur Bildung von festen Rückständen neigen - in der verbleibenden Flüssigkeit enthalten sind und in dieser Form mit dem Treibmittel im heißen Trägerluftstrom verteilt werden. Überraschenderweise bewirkt diese Verteilung im Trägerluftstrom, daß die nicht verdampfbaren Stoffe in Form von feinkörnigen Aerosolen anfallen, welche wiederum so beschaffen sind, daß sie im Trägerluftstrom problemlos abtransportiert werden können und keine Rückstände bzw. Ablagerungen verbleiben.

Dadurch ergibt sich ein weiterer Vorteil der Erfindung, indem ein gesonderter Rückstandsstrom zur Abfuhr der nicht verdampfbaren Stoffe nicht anfällt.

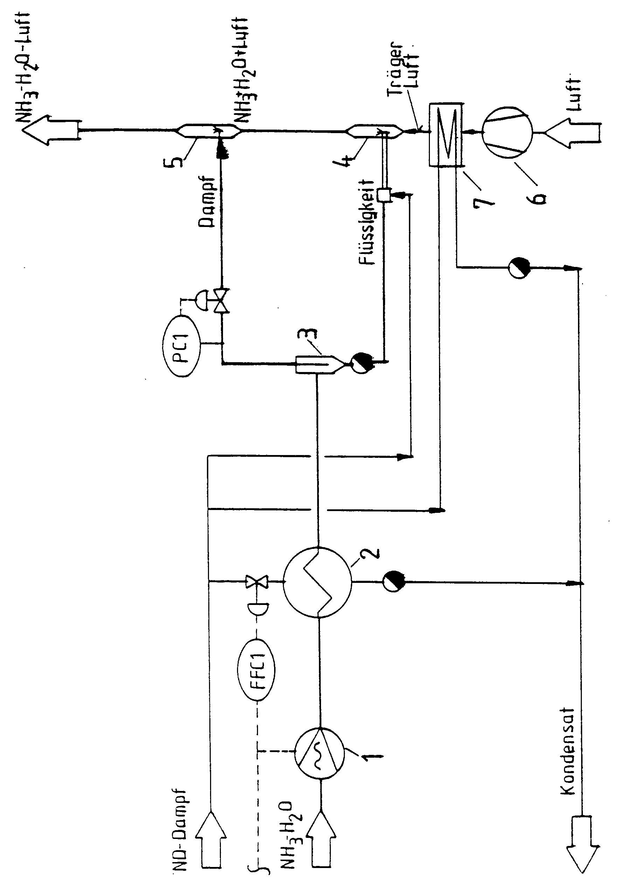

Vorteilhaft ist weiter an der Erfindung, daß sowohl als Heizmittel als auch als Treibmittel ein und derselbe Energieträger, nämlich Niederdruckdampf, angewendet wird. Niederdruckdampf steht an den vorgesehenen Einsatzorten des erfindungsgemäßen Verfahrens, wie z.B. den Standorten der mit fossilen Brennstoffen befeuerten Kraftwerksanlagen oder Chemieanlagen, üblicherweise ausreichend und preisgünstig zur Verfügung. Ein Beispiel für die mögliche technische Ausgestaltung des erfindungsgemäßen Verfahrens ist in dem beiliegenden Verfahrensfließbild als Fig. 1 dargestellt. Der rückstandfrei zu verdampfende Ammoniakwasser-Massenstrom (NH₃ - H₂O) mit mit der Pumpe 1 in den Wärmeaustauscher 2 gefördert. Dem Wärmeaustauscher 2 werden 2600 kg/h Ammoniakwasser mit 25 % Ammoniak zugeführt. Durch die teilweise Verdampfung entstehen im Wärmeaustauscher 2 2393 kg/h Dampf und 208 kg/h verbleibende Flüssigkeit.

Dieses Dampf-Flüssigkeits-Gemisch wird in den Abscheider 3 geleitet und dort in den Dampfstrom und den Flüssigkeitsstrom aufgetrennt.

Die Trägerluft wird mit Hilfe des Gebläses 6 in den Wärmeaustauscher 7 befördert. Der Wärmeaustauscher 7 erhitzt den Trägerluftstrom von 10400 kg/h auf 140 °C.

Die derart erhitzte Trägerluft wird in der Verteileinrichtung 4 zuerst mit der verbleibenden Flüssigkeit und dem Treibmittel mit Niederdruckdampf beladen. Das Treibmittel hat dabei die Aufgabe, die Flüssigkeit in Form feiner Tröpfchen in dem Trägerluftstrom zu verteilen. In der erhitzten, noch ungesättigten Trägerluft verdunstet die verteilte Flüssigkeit schlagartig. Die fein verteilte Flüssigkeit kann deshalb nicht wieder zu größeren Flüssigkeitstropfen agglomerieren. Durch die schlagartige Verdunstung der fein verteilten, mit nicht verdampfbaren festen Stoffen beladenen Flüssigkeit fallen auch die nicht verdampfbaren festen Stoffe in Form von feinkörnigen, festen Aerosolen an. Diese festen Aerosole werden vom Trägerluftstrom ablagerungsfrei weitertransportiert.

Der mit verdunsteter Flüssigkeit und mit den festen Aerosolen vorbeladene heiße Trägerluftstrom wird anschließend in die Verwirbelungseinrichtung 5 geleitet. Dort wird der gebildete Dampf dem Trägerluftstrom zugeführt und in ihm verwirbelt. Dadurch entstehen 13000 kg/h mit Ammoniak und Wasserdampf beladener Trägerluft.

Die Wärmeaustauscher 1 und 7 werden mit Niederdruckdampf beheizt. Das bei der Beheizung anfallende Kondensat wird gesammelt und zur erneuten Verwendung zurückgeführt. Der gleiche Niederdruckdrampf dient auch als Treibmittel in der Verteilereinrichtung 4. Insgesamt werden 3120 kg/h Niederdruckdampf verbraucht, wobei 100 kg/h als Treibmittel verwendet werden und die insgesamt mit der Trägerluft abgeführt werden.

Im Verfahrensfließbild Fig. 1 sind weiterhin Regeleinrichtungen dargestellt, mit denen die Verfahrensparameter des Beispiels eingestellt werden können. Die Regeleinrichtung paßt die Durchsatzleistung der Verfahrensapparatur an die Abnahmeerfordernisse des Verbrauchers an.

## Patentansprüche

1. Verfahren zum rückstandsfreien Verdampfen eines Ammoniakwasser-Massestroms, dadurch gekennzeichnet, daß ein Trägerluftstrom auf eine Temperatur erhitzt wird, die mindestens oberhalb der Taupunkttemperatur des Ammoniakwasser-/Luftgemisches liegt, daß der Ammoniakwasser-Massestrom teilweise verdampft wird, der gebildete Dampf in dem heißen Trägerluftstrom verwirbelt wird, die verbleibende Flüssigkeit mit einem Treibmittel in dem Trägerluftstrom verteilt wird und der heiße Trägerluftstrom zuerst mit der Flüssigkeit nebst Treibmittel beladen wird und der Dampf in dem derart beladenen Trägerluftstrom verwirbelt wird.

2. Verfahren nach Anspruch 1, dadurch gekennzeichnet, daß für das teilweise Verdampfen des Ammoniakwasser-Massestroms, für die Erhitzung des Trägerluftstroms und als Treibmittel Wasserdampf verwendet wird.

3. Verfahren nach Anspruch 2, dadurch gekennzeichnet, daß der Wasserdampf vorzugsweise Niederdruckdampf ist.

4. Verfahren nach Anspruch 2 und 3, dadurch gekennzeichnet, daß Niederdruckdampf mit einer Temperatur von mindestens 160 °C eingesetzt wird.

## Claims

1. Process for the residue-free evaporation of a mass stream of ammoniacal liquor,said process being characterized
in that a propellant air stream is heated to a temperature that is higher than the dew point temperature of the mixture of air and ammoniacal liquor, in that said mass stream is partly evaporated, the vapour thus formed swirling through the hot propellant air stream, the remaining liquor being mixed with a propellant agent and subsequently distributed in the propellant air stream, the hot propellant air stream being saturated with the mixture of liquor and propellant agent and the vapour then being injected into the saturated propellant air stream.

2. Process according to claim 1,
characterized in that the water vapour is used for partial evaporation of the mass stream of ammoniacal liquor, for heating the propellant air stream and for utilization as propellant agent.

3. Process according to claim 2,
characterized in that the water vapour is preferably used in the form of low-pressure steam.

4. Process according to claims 2 and 3,
characterized in that the low-pressure steam has a minimum temperature of 160°C.

## Revendications

1. Procédé pour l'évaporation libre de résidus, d'un courant volumique d'eau ammoniacale,
caractérisé en ce qu'un courant d'air propulseur est réchauffé de manière à assurer une température supérieure à celle du point de rosée du mélange d'air et d'eau ammoniacale,
et en ce que le dit courant volumique est partiellement évaporé, la vapeur ainsi dégagée étant tourbillonnée dans le courant d'air propulseur chaud et l'eau ammoniacale restante étant mélangée avec un agent propulseur pour être ensuite distribuée dans le dit courant chaud; ce dernier est alors saturé du mélange d'eau ammoniacale et d'agent propulseur et la vapeur est injectée dans ce même courant.

2. Procédé réalisé selon la revendication 1,
caractérisé en ce que la vapeur d'eau est utilisée pour l'évaporation partielle du courant volumique d'eau ammoniacale, pour le réchauffage du courant d'air propulseur et pour la mise en oeuvre comme agent propulseur.

3. Procédé réalisé selon la revendication 2,
caractérisé en ce que la vapeur d'eau est par préférence mise en oeuvre comme vapeur à basse pression.

4. Procédé selon les revendications 2 et 3,
caractérisé en ce que la vapeur à basse pression a une température minimum de 160°C.
